# EUROPEAN PATENT SPECIFICATION

(11) **EP 1 752 546 B1**
(45) Date of publication and mention of the grant of the patent: **10.11.2010**
(21) Application number: 06466007.9
(22) Date of filing: 24.07.2006
(51) Int. Cl.: C21C 7/00, C21C 5/00

(54) **The method of making high-purity steels**
Verfahren zur Herstellung von hochreinen Stählen
Procédé pour la production d'aciers très purs

(30) Priority: 26.07.2005 CZ 20050483
(43) Date of publication of application: 14.02.2007
(73) Proprietor: TRINECKE ZELEZARNY, A.S., 739 70 Trinec (CZ)
(72) Inventor: Adamik, Michal, (CZ); Sivy, Miroslav, 734 01 Cesky Tesin (CZ)
(74) Representative: Belfin, Vladimir

(56) References cited:
- JP-A- 59 056 515
- DATABASE EPODOC EUROPEAN PATENT OFFICE, THE HAGUE, NL; XP002409185 & CZ 9 600 990 A3 (TRINECKE ZELEZARNY [CZ]) 15 October 1997 (1997-10-15)
- "IR-UT: A LADLE TREATMENT STATION WITH TEMPERATURE CONTROL" STEEL TIMES INTERNATIONAL, DMG WORLD MEDIA, LEWES, GB, vol. 15, no. 4, 1 July 1991 (1991-07-01), page 20,23, XP000233289 ISSN: 0143-7798
- GULYI V K ET AL: "SYSTEM FOR VACUUM DEGASSING OF OPEN-HEARTH STEEL: FROM CONSTRUCTIONTO MASTERY OF THE TECHNOLOGY" METALLURGIST, CONSULTANTS BUREAU. NEW YORK, US, vol. 40, no. 9/10, 1 September 1996 (1996-09-01), pages 183-184, XP000690753 ISSN: 0026-0894
- EIJI MORIKAWA ET AL: "RECENT DEVELOPMENTS IN THE IR-UT LADLE TREATMENT PROCESS" STEEL TIMES, FUEL & METALLURGICAL JOURNALS LTD. LONDON, GB, vol. 221, no. 9, 1 September 1993 (1993-09-01), pages 391-392, XP000397500 ISSN: 0039-095X
- AGARYSHEV A I ET AL: "CHEMICAL HEATING OF STEEL IN THE LADLE" METALLURGIST, CONSULTANTS BUREAU. NEW YORK, US, vol. 39, no. 11/12, 1 November 1995 (1995-11-01), pages 220-221, XP000623499 ISSN: 0026-0894
- PHILLIPS C I ET AL: "VACUUM DEGASSING OF LIQUID STEEL AT BRITISH STEEL LLANWERN WORKS" STEEL TIMES, FUEL & METALLURGICAL JOURNALS LTD. LONDON, GB, vol. 219, no. 4, 1 April 1991 (1991-04-01), pages 206-207, XP000205631 ISSN: 0039-095X
- KHREBIN V N ET AL: "EFFECTIVENESS OF CIRCULATION VACUUM DEGASSING OF STEEL" STEEL IN TRANSLATION, ALLERTON PRESS, NEW YORK, NY, US, vol. 24, no. 10, January 1994 (1994-01), pages 7-8, XP000516426 ISSN: 0967-0912

## Description

### Field of the Invention

The invention relates to the method of making high-purity steels, for example bearing steels by their melting and subsequent off-furnace treatment and vacuum degassing.

### Background of the Invention

The high-purity steels, for example bearing steels, are usually hyper-eutectoid chrome steels with basic content of carbon about 1 mass %, content of chromium about 1.5 mass % in most cases and contents of manganese according to marks about 0.35 or 1.10 mass %. Present methods of making these steels are limited by quite specific requirements set on them, namely in addition to a number of another parameters, such as hardness and wear resistance, compression strength, and especially by extremely high demands on degree and character of their micropurity, because a lifetime of bearings manufactured from these steels depends upon quantity, sort, shape, size and distribution of inclusions as well as upon their physical properties.

Up to now, these steels are made by so-called combined procedures, consisting in the first phase in melting steel usually in electric arc furnace, where the steel near to its final required composition is made. Next phase is then represented by some of suitable procedures of off-furnace refining, for example by vacuum degassing in a basic ladle, and it has got then refining mission, in order especially to reduce content of hydrogen, desulphurize, deoxidize and minimize the degree of the bath contamination by non-metallic inclusions, homogenize it and do a final adjustment of composition and temperature. The final deoxidation and adjustment of content of carbon are generally made by precipitating deoxidation with possibility of elimination of significant part of inclusions in period of so-called clarification of heat.

With regard to heat losses among these particular phases it is necessary to carry out the post-heating of treated steel in the ladle before or within the course of the second phase, whereas for example pursuant to the document CZ 283552, where subject of the patent is represented by the method of bearing steel making in electric arc furnace, it is known to carry out this post-heating after tapping from electric arc furnace through so called chemical heating by means of VOD (Vacuum Oxygen Decarburation) facility. The chemical heating is hereat invoked by an exothermic reaction caused by oxidation of aluminium or silicon added to the melt with gaseous oxygen at a current stirring of melt by argon blowing. But the disadvantage of this method is necessity of fulfilment of strict requirements concerning a quality of iron scrap in term of smallest possible amount of impurities, for example copper and other undesirable elements.

There are also known methods of making these steels consisting in their melting in oxygen converters, indicated as BOF (Basic Oxygen Furnace), and in consequent vacuum degassing with eventual interheating in a ladle furnace or also by another manufacturing processes, within what, for example, the whole process takes place in vacuum. A disadvantage of these methods is generally considerable technological or energetic exigency of production.

That is why an objective of submitted invention is to eliminate the disadvantages of present methods of making high-purity steels and at the same time further extension of possibility of technology of making high-purity, for example bearing steels with reduction of technological or energetic exigency together with achievement of fully comparable or even better results regarding their quality and achievement of lower content of titanium in the steel as compared with making steel through the ladle furnace.

### Summary of the Invention

This before-cited object is solved by the method of making high-purity, for example bearing steels, consisting in their melting and consequent off-furnace treatment in a ladle with chemical post-heating of treated melt to necessary temperature carried out at the atmospheric pressure at a current stirring of it by argon according to submitted invention, the principle of what consists in the fact that steel treated in the oxygen converter (BOF) is discharged from this melting unit into the ladle with the basic lining with detention of the oxidic slag with addition of a synthetic refining slag based on CaO/CaF₂/Al₂O₃ and alloying elements into the ladle in the course of tapping. Then heating and refining of steel are carried by means of chemical heating facility (IR-UT) under high intensity of argon blowing overhead by submerged ceramic rod in combination with argon blowing through at least one blast block placed in the bottom of the ladle after which vacuum degassing treatment on a vacuum degassing facility, for example RH, and final clarification of steel without stripping of its level surface are carried out.

The principle of the invention consists in the fact that after the chemical heating of steel still before the vacuum degassing the addition of deoxidizing agents is performed so that the generated oxidic slag is transformed into a reducing one with the total content of FeO + MnO in the slag max. 1.5 mass % .

An advantage of this method of making high-purity, for example bearing steels in oxygen converter with consequent chemical heating and refining of steel in the ladle carried out by means of the chemical heating facility and with final vacuum refining, is done by achievement of high purity of these steels, especially by reduction of amount of oxidic inclusions of size bigger than 15 micrometers and lower content of inclusions based on titanium at current assurance of other parameters by specification of customers, for example content of total O₂ max. 15 ppm.

### Description of the Preffered Embodiment

In the further declared example of invention realization a bearing steel containing carbon 0.95 mass %, manganese 0.35 mass %, silicon 0.25 mass %, phosphorus 0.010 mass %, sulphur 0.008 mass %, and chromium 1.50 mass % is made by this method. The steel is made in top blasted oxygen converter (BOF) whereas temperature of steel after tapping in the pouring ladle amounts to 1540° C.

The steel from this melting unit is discharged into the pouring ladle with the basic lining with detention of a oxidic slag with addition of a synthetic refining slag based on CaO/CaF₂/Al₂O₃, in this factual example of realization of 7.5 kg of CaO and 2.2 kg of CaF₂ per ton of steel and addition of alloying elements, in this factual example of relization of 15 kg of chromium, 2.2 kg of manganese, 2.8 kg of aluminium, and 9.5 kg of carbon. The alloying can be carried out in combination of alloying by liquid alloying melt with post-alloying by solid alloying ingredients.

The off-furnace steel treatment in the pouring ladle comes after whereas by the intensive stiirring of steel by argon and at the atmospheric pressure by means of chemical heating facility, so-called IR-UT (Injection Refining - Up Temperature) facility, the post-heating of steel to temperature by c. 120° C higher than liquidus temperature of this steel is carried out.

The stirring of the treated melt in the ladle is thereat carried out by combined feeding of argon into the melt, namely partly by underfeeding through the blast block placed in the bottom of the ladle and overfeeding of argon top-down to the bottom of the ladle by submerged ceramic rod. Argon is fed into the melt by the total amount of it to 1400 1/min. whereas a volume part of bottom blown argon of its total amount represents 20 to 50 volume %. By addition of deoxidizing agents still on the chemical heating facility the generated oxidic slag is transformed into a reducing one with current achievement of the total content of iron and manganese monoxides in the slag max. 1.5 mass %, in this case even under value of 1.0 mass %. In this factual case the addition is powdered ferrosilicon in the amount of 1.0 to 1.7 kg per ton of steel added on the slag after heating. Then the vacuum treatment on the vacuum degassing facility RH follows finished by clarification of the steel without stripping of its level surface, that means the clarification of steel in the ladle is carried out with such an intensity that the liquid slag covers the whole level surface of steel in the ladle and so that it is forestalled a contiguity of steel with atmosphere and its reoxidation.

### Field of the Application

The method of steel making according to the invention can be widely used for making in principle of all high-purity steels, namely there where there are no ladle furnaces available and steel plant is furnished by chemical heating and vacuum degassing facilities.

## Claims

1. The method of making high-purity steels consisting in their melting and consequent off-furnace treatment in a ladle with chemical post-heating of treated melt to necessary temperature carried out at the atmospheric pressure at current stirring of it by argon, wherein steel treated in the oxygen converter (BOF) is discharged from this melting unit into the ladle with the basic lining with detention of an oxidic slag with addition of a synthetic refining slag based on CaO/CaF₂/Al₂O₃ and alloying elements into the ladle in the course of tapping, then heating and refining of steel are carried by means of chemical heating facility (IR-UT) at high intensity of argon blowing overhead by submerged ceramic rod in combination with argon blowing through at least one blast block placed in the bottom of the ladle after which vacuum degassing treatment on a vacuum degassing facility and the final clarification of steel without stripping of its level surface are carried out, **characterized by** the fact, that after the chemical heating of steel and before the vacuum degassing treatment the addition of deoxidizing agents is performed so that the generated oxidic slag is transformed into a reducing one with the total content of FeO + MnO in the slag max. 1.5 mass %.

## Patentansprüche

1. Verfahren zur Herstellung von hochreinen Stählen, bestehend in deren Zerschmelzen und anschließender Aufbereitung außerhalb des Ofens in einer Pfanne mit der chemischen Nacherwärmung der zu verarbeitenden Schmelze auf die Soll-Temperatur, durchgeführt unter dem atmosphärischen Druck bei deren gleichzeitigen Rühren mit Hilfe von Argon, wobei der im Sauerstoffblaskonverter (BOF) aufzubereitende Stahl aus dieser Schmelzeinrichtung in die Pfanne mit basischer Zustellung unter Zurückhaltung der Oxidationsschlacke und mit Zugabe der synthetischen Raffinierschlacke auf der CaO/CaF₂/Al₂O₃-Basis und der Legierungselemente in die Pfanne während des Abstichs abgelassen wird; nachdem erfolgt die Stahlerwärmung und -reinigung in der chemischen Erwärmungsanlage (IR-UT) beim hochintensiven vom oben durchgeführten Argon-Blasen mit der keramischen Tauchlanze, kombiniert mit Argon-Blasen über mindestens einen im Pfannenboden befindlichen Blasdüsenblock, worauf die Vakuumentgasung in der Vakuumentgasungsanlage und die endgültige Aufklärung, ohne den Stahlspiegel zu entblößen, erfolgt, **dadurch gekennzeichnet, dass** nach der chemischen Stahlaufwärmung die anfallende Oxidationsschlacke vor Vakuumentgasung durch Zusetzen von reduzierenden Mitteln in die Reduktionsschlacke mit dem Gesamtgehalt von FeO + MnO in der Schlacke von höchstens 1,5 Gew.-% verwandelt wird.

## Revendications

1. Procédé pour la production d'aciers très purs consistant dans leur fusion et dans leur traitement ultérieur de la masse fondue à la température préscrite hors four dans une poche munie de réchauffement chimique, réalisé à la pression atmosphérique en remuant simultanément la masse fondue à l'aide d'argon, quand l'acier traité dans le convertisseur à oxygène (BOF) est déchargé de ce dispositif de fusion dans la poche dotée de revêtement basique tout en retenant le laitier oxydant et en ajoutant au cours de la coulée dans la poche le laitier synthétique d'affinage sur la base de CaO/CaF₂/Al₂O₃ et les éléments d'alliage; ensuite on effectue le réchauffement et l'affinage de l'acier dans une installation de réchauffement chimique (IR-UT) à forte intensité du soufflage supérieur de l'argon à l'aide d'une canne céramique immergée, combiné au soufflage de l'argon à travers d'au moins un bloc de duses situé au fond de la poche, suivi de dégazage sous vide dans un dégazeur à vide et de clarification finale sans mettre à nue la surface de l'acier, **caractérisé par le fait qu'**après le réchauffement chimique de l'acier et avant le dégazage sous vide le laitier oxydant apparu se transforme par l'addition de désoxydants en laitier réducteur ayant la teneur totale de FeO + MnO dans le laitier égale au maximum à 1.5 % en masse.
